# EUROPEAN PATENT APPLICATION

(11) **EP 2 568 165 A2**
(43) Date of publication of application: **13.03.2013**
(21) Application number: 12183464.2
(22) Date of filing: 07.09.2012
(51) Int. Cl.: F03D 1/02, F03D 11/04

(54) **Wind turbine, method for building a wind turbine and method for increasing the height of an existing wind turbine**

(30) Priority: 09.09.2011 FI 20115885
(71) Applicant: YIT Rakennus Oy, 01530 Vantaa (FI)
(72) Inventor: Orko, Harri, 02210 Espoo (FI); Vuokila, Petri, 01820 Klaukkala (FI); Hartikainen, Jouko, 02630 Espoo (FI); Terhelä, Mika, 01450 Vantaa (FI)
(74) Representative: Westerholm, Carl Christian

(57) **Abstract**

The invention refers to a wind turbine comprising a verical tower structure (1) comprising a first tower part (2) and a second tower part (3), which second tower part (3) at least partly is located above the first tower part (2), and that a first wind turbine unit (4) is arranged in the first tower part (2) and a second wind turbine unit (5) is arranged in the second tower part. The invention also refers to a method for constructing a wind turbine, which wind turbine comprises a vertical tower structure and the method comprises stages, in which a first tower part (2) and a second tower part (3) are cast out of concrete such, that the second tower part (3) at least partly is located inside the first tower part (2), the first tower part (2) is arranged to the substratum in an attached manner, a second wind turbine unit (5) is arranged in the second tower part (3), the second tower part (3) is lifted at least partly out of the first tower part (2), the first tower part (2) and the second tower part (3) are attached to each other, and a first wind turbine unit (4) is arranged in the first tower part (2). The invention further refers to a method for increasing the height of an existing wind turbine in order to form an extended wind turbine, which existing wind turbine comprises an existing tower and an existing wind turbine unit and the method comprises stages, in which, around the existing tower (3), a tower extension part is cast out of concrete , the existing tower together with the wind turbine unit (5) arranged in it are lifted or pulled in relation to the tower extension part such, that the tower extension part forms a first tower part (2) of the extended wind turbine and the existing tower (3) forms a second tower part (3) of the extended wind turbine and the existing wind turbine unit (5) forms a second wind turbine unit (5), and such, that the second tower part (3) at least partly is located above the first tower part (2), the first tower part (2) and the second tower part (3) are attached to each other to form the tower structure (1), and, additionally, a first wind turbine unit (4) is arranged in the extended wind turbine.

## Description

### Background of the Invention

The invention refers to a wind turbine according to the preamble of Claim 1.

The invention further refers to a method for building a wind turbine, according to Claim 12.

The invention further refers to a method for increasing the height of an existing wind turbine, according to Claim 17.

Since ancient times wind turbines have been utilized for energy production, and nowadays there has been a growing demand for them. In recent years, the wind turbines have shown remarkable development as the requirements for employing more environmentally gentle energy forms have been increasing. There has been a growing demand for more energy-efficient wind turbines, but, on the other hand, enough real estate is not necessarily being allocated for the wind turbines, such that, in the most densely populated areas, the wind turbines have to compete for real estate with other claimants and, thus, the wind turbines' utilization of space should be as optimal as possible. The energy extracted from the wind is proportional to the wind speed. In theory, as the wind speed is doubled, the energy will be eight-fold, i.e. the wind speed power is proportional to the third power of the wind speed. As you move upwards off the ground surface, the wind speed grows, since the impact on the wind of mechanical obstacles on the ground is reduced. The structure of the ground surface greatly influences the rate of decrease in the braking effect as you move upwards. Forests, hills, buildings and other such mechanical obstacles all affect the speed and direction of the wind. Naturally, the spot with most wind should locally be chosen for a wind turbine. The choice of location is instrumental to the production capacity of the wind turbine. The construction site should be such, that no mechanical obstacles exist in the vicinity of the wind turbine but, rather, such that the wind will have free passage. Such areas with most wind can be found in places where the edge of forests is far off, such as e.g. sea shores, the vicinity of inland lakes, areas with open field and, in hilly areas, the top of high rises and mountain slopes and peaks. Since the wind speed increases as you go upwards, the machinery of a wind turbine should be raised as high as possible in order to extract as much energy as possible.

The main components of a traditional wind turbine are: a wind turbine unit, a tower, a foundation and a transformer. The wind turbine unit typically comprises a rotor and a main shaft, to which the rotor is attached; a gear box, to which the main shaft is connected; a generator producing electricity as it rotates; a gear box converting the rotation rate of the rotor to a rate suitable for the generator; converters and other control devices, e.g. for turning the wind turbine unit such that the rotor faces the wind. In this text, the rotor and the engine room are considered to constitute the main components of the wind turbine unit, which engine room can comprise a gear box, a generator, converters and control devices. There are several different types of wind turbines, such as a vertical shaft wind turbine, wherein the rotor and the wind turbine unit, if present, are parallel to the tower, or a horizontal shaft wind turbine, wherein the wind turbine unit is essentially horizontal in relation to the ground and the wind flows in the direction of the main shaft, or 1-, 2- or 3- or multi-blade wind turbines. The turbines mostly used in large scale power production are horizontal shaft wind turbines having three-blade rotors. In this application, by a wind turbine is meant a wind turbine of industrial dimensions, i.e. a wind turbine of more than 1 MW. The overall height of the tower in such a wind turbine is at least 80 meters and the rotor diameter is at least 80 meters.

The tower is one of the most important components of a wind turbine. The purpose of the tower is to elevate the wind turbine unit as high up as possible so that the wind flow can grip the rotor unhindered throughout the rotor area. Increasing the tower height aggravates the loads that impact the tower. The higher the tower, the more robust the structures of the tower have to be. Typically, in wind turbines, because of the loads and vibrations, one has been restricted to steel towers, generally 60 - 100 meters in height.

As stated above, the tower structures get more robust as the tower height is increased. In practice, this constitutes a growth in tower diameter and wall thickness. Even at present, the external dimensions and weights of tower elements approach the limits of the geometry and load carrying capacity of the road network, and thus, transporting larger pieces is not possible, the authorities refuse permits for special transports, or load carrying capacity and/or underpass heights of bridges are insufficient. With tall towers, as tower heights exceed 120 meters, there will be a problem in installing a heavy wind turbine unit and a rotor in the tower. There are few cranes having adequate hoisting capability and machines lifting to heights above 140 meters are practically non-existent. Cranes used for erecting wind turbines are large cranes to be assembled on site. In a wind turbine park, the distance between turbines is about 500 meters, and since just one turbine can be installed in any one hoisting location, a lot of time is spent assembling and disassembling the crane.

The publication WO 2010/098813 presents a more efficient way of producing more energy and of reducing the costs per kW. This more efficient wind turbine is implemented by arranging two wind turbine units including rotors side by side by means of a bridge structure onto a tower of normal height, which turbine units can be tilted, when the wind direction differs from the horizontal. This solution alleviates he problem of lack of space, in the case of insufficient real estate for the wind turbine. However, the solution according to the publication does not help in a situation, where higher wind turbine productivity is desired in an area, where there is little space and there might be more mechanical obstacles for the wind, in which case more optimal wind conditions prevail higher up relative to the ground level than normally is the case.

### Brief Description of the Invention

The object of the invention is to solve the problems stated above.

The object of the invention is achieved by means of a wind turbine according to the independent Claim 1.

The invention also refers to a method, according to the independent Claim 12, for building a wind turbine.

The invention also refers to a method, according to the independent Claim 17, for increasing the height of an existing wind turbine.

Preferable embodiments of the invention are presented in the dependent patent claims.

The invention refers to a wind turbine comprising a vertical tower structure comprising a first tower part and a second tower part, which second tower part, at least partly, is located above the first tower part, and that a first wind turbine unit is arranged in the first tower part and a second wind turbine unit is arranged in the second tower part. The invention explicitly refers to a wind turbine of industrial dimensions i.e. a wind turbine of more than 1 MW, the total height of the tower of which is at least 80 meters.

A wind turbine according to the invention comprises a tower structure, which, according to a preferable embodiment of the invention, is a two-part one such, that the tower structure comprises a first tower part and a second tower part, which second tower part is attached to the first tower part in such a way, that the second tower part extends essentially upwards from the first tower part. The first tower part and the second tower part comprise a lower end and an upper end such, that the tower structure extends from the upper end of the first tower part as the second tower part and that the wind turbine units are arranged in an attached manner in the areas of the upper ends of the first and the second tower part. Preferably, the wind turbine units are arranged at the areas of the upper end of the first and the second tower part such, that the machine rooms of the wind turbine units are located in an attached manner in the tower part. The wind turbine according to the invention can also comprise more than two parts such, that the first and/or the second tower part can be arranged of several parts or, that there can be more than two tower parts, in which case, in addition to the first and the second tower part, there will be, for example, a third tower part or a third and a fourth tower part. In other words, the tower structure can comprise a third tower part, which, at least partly, is located above the second tower part.

According to a preferable embodiment of the invention, the first tower part and the second tower part are arranged attaching to each other in a telescopic manner such, that the second tower part, which extends upwards from the first tower part, partly is located inside the first tower part. Accordingly, then, the second tower part is not in its entirety located outside and above the first tower part, but rather, the first and the second tower parts are partly overlapping, the second tower part remaining inside the first tower part. Then, the first tower part has a diameter which is essentially larger than that of the second tower part, whereby the second tower part at least partly fits in the interior of the first tower part. Preferably, the tower parts are attached to each other, to the extent that they overlap, by means of e.g. bolting them together and/or by casting concrete into the space remaining between the tower parts.

According to a second preferable embodiment, the first and the second tower part are arranged fastened to each other by means of a flange joint or other equivalent joint such, that the tower parts are not nesting, but rather, the second tower part extends from the first tower part via the joint formed in common by the end faces of the tower parts. Other joints attaching the first and the second tower parts to each other are also possible.

The first tower part comprises a foundation to be arranged directly into the ground or to an equivalent substratum, or the first tower part can be attached to a separate foundation. A first end of the first tower part, i.e. the lower end, is arranged in an attachable manner to the ground or to a foundation arranged into the ground or to some other equivalent substratum, and a second end of the first tower part, i.e. the upper end, is arranged in an attachable manner to the first end, or to the area of the first end, of the second tower part, i.e. to the lower end, or to the area of the lower end, of the second tower part. A first wind turbine unit comprising a machine room and a rotor is also arranged to the second end, or in the vicinity of the second end, of the first tower part. A second wind turbine unit, also comprising a machine room and a rotor, is attached to the second end or in the vicinity of the second end of the second tower part. The machine rooms of the wind turbine units are attached to the tower parts and, of course, the rotors are located at the outside of the tower part. The first wind turbine unit and the second wind turbine unit are arranged in the tower structure vertically above each other such, that they are located at a distance from each other and that the first wind turbine unit and/or the second wind turbine unit comprises a machine room, which machine room is directly attached in the vertical tower structure. In other words, the machine room of the wind turbine unit is integrated in the vertical tower structure such, that the machine room is located in the tower structure attached to the tower structure. This can also mean that the machine room, particularly in the upper tower part, can be located on top of the tower structure attached, however, directly to the tower structure. Attaching directly means, that there are attachment means between the the machine room and the tower structure, but the machine room is not entirely located outside the tower structure, e.g. at the end of a supporting arm. The first wind turbine unit and the second wind turbine unit can work independently or together. The first wind turbine unit can also be arranged in the tower structure such, that it is located entirely, or to the main part, in the area of the second tower part. Then, the first tower part can comprise the first tower part in its entirety and a portion of the second tower part, in which case the first tower part is considered to be formed out of several parts and it ends at the location point of the first wind turbine unit, from which point the second tower part begins. The first and/or the second tower part is preferably made of concrete.

According to another embodiment of the invention, the first tower part connects to the second tower part by means of a flange joint or some other equivalent joint. The first tower part and the second tower part are mutually attached by a releasable joint, such as a bolt joint, and/or by a permanent joint, such as concrete casting. The tower parts are preferably mutually attached such, that they are bolted together and, additionally, concrete is cast between the tower parts at the joining point. The joint between the first tower part and the second tower part can comprise the first wind turbine unit, particularly its machine room. Preferably, the shape of the first tower part and/or the second tower part is at least partly conical.

The invention also refers to a method for building a wind turbine comprising a vertical tower structure, which method comprises stages, in which a first tower part and a second tower part are cast out of concrete such, that the second tower part at least partly is situated inside the first tower part, the first tower part is arranged in an attached manner to the substratus, a second wind turbine unit is arranged in the second tower part, the second tower part is lifted at least partly out of the first tower part, the first tower part and the second tower part are mutually attached and a first wind turbine unit is arranged in the first tower part.

In a solution according to a preferable embodiment of the invention, a two rotor tower, preferably about 200 meters in height, is implemented using a slipform concrete slide casting technique or some other technique, such as one with a climbing form or some other one, such that two tower parts are slipform cast inside each other, each tower part preferably being about 100 meters in height. The outer tower part, i.e. the first tower part, is attached to the ground or it is fastened to a separate foundation or other substratus, and the inner tower part, i.e. the second tower part, once the concrete has cured, is jacked up, i.e. lifted or pulled, in its vertical position to its peak height. Preferably, the upper machinery and rotor, i.e. the second wind turbine unit, prior to the jacking up, is installed in the inner tower part, preferably in its upper portion, whereby also the second wind turbine unit will be rising to its peak height as the inner tower part is rising. Also the lower machinery and rotor, i.e. the first wind turbine unit, is installed in the upper portion of the outer tower, i.e. in the area of connection between the first tower part and the second tower part or in the vicinity of that. The first tower part and the second tower part are mutually attached by means of a releasable joint, like for instance a bolt joint and/or a permanent joint, such as casting of concrete in the area of the joint, i.e. a concrete joint.

In a method according to a preferable embodiment of the invention, the first wind turbine unit and the second wind turbine unit are arranged in the tower structure vertically above each other such that they are at a distance from each other and that the first wind turbine unit and/or the second wind turbine unit comprises a machine room, which machine room is attached directly to the vertical tower structure.

The invention further refers to a method for increasing the height of an existing wind turbine in order to form an extended wind turbine, which existing wind turbine comprises an existing tower and an existing wind turbine unit, and which method comprises stages, in which a tower extension part is cast out of concrete surrounding the existing tower, the existing tower together with the wind turbine unit arranged in it are lifted or pulled in relation to the tower extension part such that a first tower part of the extended wind turbine is formed out of the tower extension part and a second tower part of the extended wind turbine is formed out of the existing tower and a second wind turbine unit is formed out of the existing wind turbine unit, and which second tower part is located at least partly above the first tower part, the first tower part and the second tower part are mutually attached to form a tower structure, and a first wind turbine unit is additionally arranged in the extended wind turbine. Preferably, the first wind turbine unit is arranged in the first tower part.

As stated before, the wind turbine unit comprises a machine room and a rotor. In the method, the wind turbine unit is arranged in the first tower part and the existing wind turbine unit, i.e. the second wind turbine unit, is already arranged in the second tower part such that the machine room of the wind turbine unit is already attached in the tower part. In other words, the machine room is located in the tower part such, that the machine room essentially is located in the area of the tower part and not entirely outside the tower part. The machine room can be located, at least partly, inside the first tower part and/or the second tower part, space in the tower part can for example be arranged for the machine room or for part of it. Alternatively, the machine room can be directly attached to the tower part.

According to a second embodiment of the method, according to the invention, for increasing the height of an existing wind turbine in order to form an extended wind turbine, a first wind turbine unit is arranged in the second tower part. In other words, the machine room of the first wind turbine unit, or at least part of the machine room, is arranged in the second tower part either such, that the machine room is attached to the tower part, or even such, that the machine room at least partly extends through the tower part.

According to a third embodiment of the method, according to the invention, for increasing the height of existing wind turbine in order to form an extended wind turbine, a first wind turbine unit is arranged in the joint area of the first tower part and the second tower part. In other words, the machine room of the first wind turbine unit, or at least part of the machine room, is arranged at the joint area of the first tower part and the second tower part either such, that the machine room is attached at the joint area of the tower parts or even such, that the machine room, at least partly, extends through the joint area of the tower parts.

In a preferable embodiment of the invention a first and a second wind turbine unit are arranged in the tower structure vertically above each other such, that they are located at a distance from each other and that the first wind turbine unit and/or the second wind turbine unit comprises a machine room, which machine room is attached directly to the vertical tower structure. In particular, the machine room of the first wind turbine unit and the machine room of the second wind turbine unit are arranged in the tower structure such, that they are attached above each other in the tower structure at a distance from each other such, that there will remain some tower structure between the machine rooms. Preferably, also the rotor parts of the wind turbine units are located above each other outside the tower structure at a distance from each other.

According to one embodiment, an existing tower and a tower extension part according to the invention are made of different materials.

According to a preferable embodiment of the invention, an existing wind turbine made of steel or concrete, for example, can be updated according to the invention by raising it and by adding another wind turbine unit to the extension part or in the vicinity of it. An outer tower part is cast out of concrete around the existing tower, which outer tower part forms a lower, or first, tower part as the inner, i.e. the existing, tower part is lifted or pulled at least partly above the first tower part establishing a second tower part. The wind turbine unit already present in the second tower part is raised along with the second tower part above the first tower part and, to the first tower part or in the vicinity of the first tower part, a first wind turbine unit is attached preferably such, that the first and second wind turbine units will be located essentially above each other at a distance from each other.

A preferable embodiment of a wind turbine according to the invention provides the advantage, that less real estate is required for constructing a wind power park, since a wind turbine according to the invention will substitute to two traditional wind turbines.

By using a wind turbine according to the invention, the amount of cabling required for the wind power park is also reduced, since the number of wind turbines needed is reduced by half, as there will be two wind turbine units in one tower. Also, established turbine technology can be utilized, i.e. wind turbines of 2-3 MW, for example, and thus the risk of employing novel 5-7 MW plants can be avoided, as one wind turbine having two wind turbine units achieves the power levels of the newer plants.

Using the method for construction a wind turbine, according to the invention, an advantage is achieved in that, due to the casting method, a tower of a height of 200 meters, for example, can be cast as rapidly as a tower of 100 meters, whereby the inner tower, due to the casting method, comes as a bonus, so to speak. The invention also offers advantages in that there can be common components for the two wind turbine units in a tower, whereby cost savings per unit will be achieved. Using wind turbines having two wind turbine units such heights are achieved that a wind turbine can be cost efficient in areas where wind turbine construction previously has not been feasible.

Using the method, according to the invention, for increasing the height of an existing wind turbine, an advantage is achieved in that the present wind turbines can be updated and raised to new heights and production levels in a simple and rapid manner. Then, in practice, a new outer shell is constructed around the the old tower by slipform casting or by some other method and, after the casting, the old tower is jacked to new heights and another wind turbine unit is installed at an intermediate level.

By means of the invention, two power plants can be installed at one hoisting location and thus duration of labor per power plant is significantly reduced. Also, installing a wind turbine can be done successfully only in fairly windless conditions. Reducing the installation time alleviates the risk of waiting time caused by windy conditions.

Below, when the term wind turbine unit is mentioned, it also includes the terms machine room and nacelle.

### List of Figures

Below, some preferable embodiments of the invention are presented in greater detail with reference to the attached figures, of which
Figure 1 shows a preferable embodiment of a wind turbine according to the invention, and
Figure 2 shows a side view of the wind turbine according to the invention, shown in Figure 1.

### Detailed Description of the Invention

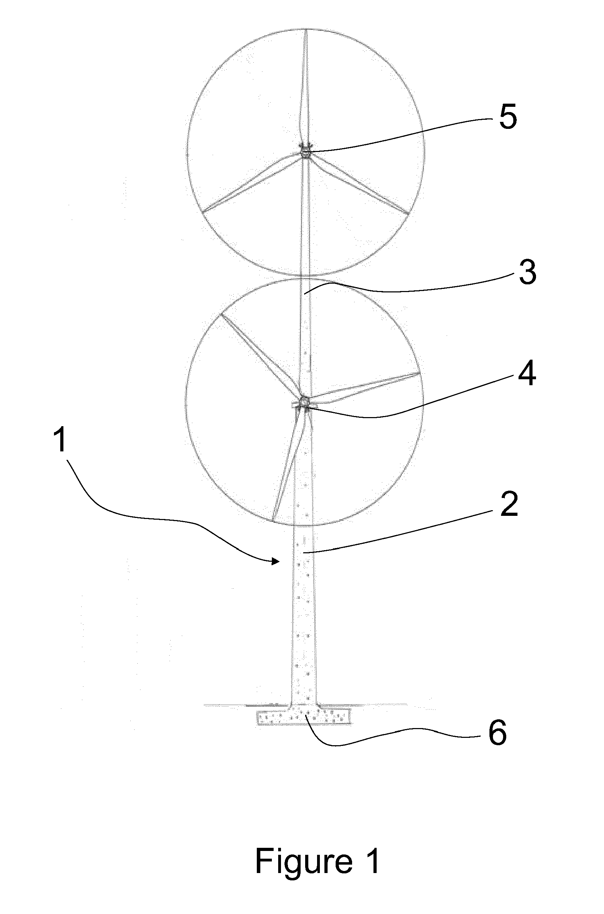

Figure 1 shows a wind turbine according to the invention, in which the tower structure 1 comprises two tower parts attached to each other vertically. In this embodiment according to the invention, the first tower part 2 is attached directly to the ground, whereby the first tower part 2 comprises the foundation in itself. A second tower part 3 is arranged to the first tower part 2 such, that, initially, the tower parts 2, 3, mainly made of concrete or at least partly of concrete, are slipform cast or produced in some other manner inside each other such, that the second tower part 3 preferably is located at least partly inside the first tower part 2 and, when the cast is cured, the second tower part 3 preferably will be lifted or pulled out of the interior of the first tower part 2 and the tower parts will be attached to each other. The first and second tower parts 2, 3 are preferably attached to each other by bolting or by mechanically attaching in some other way and, in addition, concrete can be cast between the first and second tower parts 2, 3. Prior to jacking, i.e. lifting or pulling, the second tower part 3 upwards, a second wind turbine unit 5 is attached to the upper end of the second tower part such that, as the second tower part 3 reaches its highest position, also the second wind turbine unit 5 is ready in place. After attaching the first and second tower parts 2, 3 to each other, a first wind turbine unit 4 will be arranged at the upper end of the first tower part 2. The wind turbine units 4, 5 are arranged in the tower parts in a horizontal axis orientation, i.e. such, that a wind turbine unit is essentially horizontal relative to the ground, i.e. the tower and the wind turbine unit are essentially perpendicular to each other.

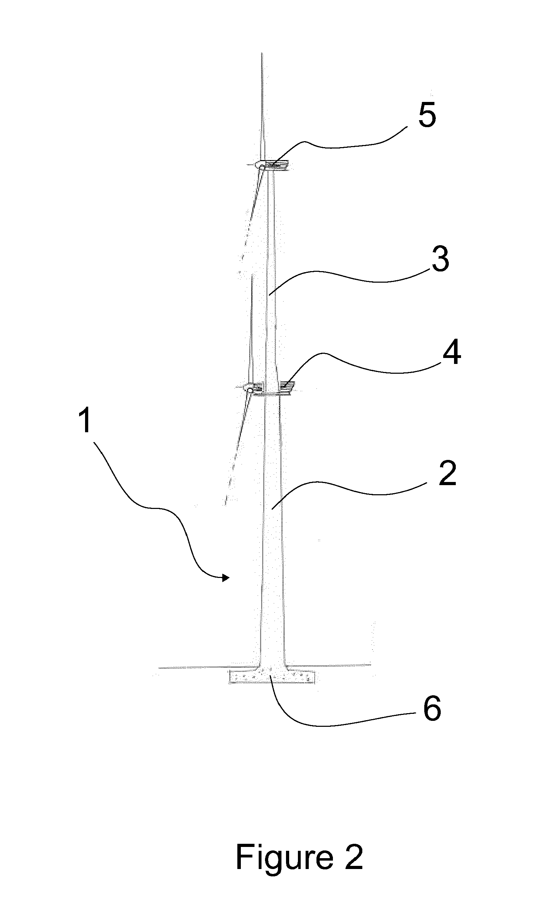

Figure2 shows a side view of the wind turbine according to the invention, shown in Figure 1. At the work site, the installation of the wind turbine is preferably done such, that, either onto an existing foundation the first tower part 2 and the second tower part 3 are slipform cast out of concrete or cast in some other manner vertically inside each other essentially simultaneously, or, if there is no separate foundation, the first tower part 2 including a foundation and the second tower part 3 including their foundation are cast inside each other. The cast having cured, the second wind turbine unit 5 is arranged at the area of the upper end of the second tower part 3, after the installation of which the second tower part 3 and the second wind turbine unit 5 are lifted or pulled upwards. The first tower part 2 and the second tower part 3 are preferably at least partly conical in shape, but the invention is not limited in regard to their shape. The first tower part 2 and the second tower part 3 are arranged mutually telescopically such, that the second tower part 3, at the fastening stage, preferably remains partly inside the first tower part 2. Also, the first tower part 2 and the second tower part 3 can be arranged to be attached to each other by means of a flange joint, for example, whereby the second tower part 3 would not remain inside the first tower part 2 at all, but the tower parts will be connected to each other via the flange.

A person skilled in the art will readily realize that, as technical advances are made, the basic idea of the invention can be implemented in many different ways. Thus, the invention and its embodiments are not restricted to the examples described above, but rather, they can vary within the scope of the patent claims.

## Claims

1. A wind turbine comprising a vertical tower structure (1), **characterized in, that** the tower structure (1) comprises
a first tower part (2) and a second tower part (3), which second tower part (3) at least partly is situated above the first tower part (2),
and that a first wind turbine unit (4) is arranged in the first tower part (2) and a second wind turbine unit (5) is arranged in the second tower part.

2. Wind turbine according to Claim 1, **characterized in, that** the first tower part (2) and the second tower part (3) comprise a lower end and an upper end such, that the tower structure extends from the upper end of the first tower part (2) as the second tower part (3) and that the wind turbine units (4, 5) in an attached manner are arranged in the area of the upper ends of the first and the second tower parts (2, 3).

3. Wind turbine according to Claim 1 or 2, **characterized in, that** the first and/or the second tower part (2, 3) are made of concrete.

4. Wind turbine according to any one of Claims 1 - 3, **characterized in, that** the first tower part (2) comprises a foundation (6) to be arranged directly to the ground or to some equivalent substratus.

5. Wind turbine according to any one of Claims 1 - 3, **characterized in, that** the first tower part (2) can be attached to a separate foundation.

6. Wind turbine according to any one of Claims 1 - 5, **characterized in, that** the first wind turbine unit (4) and the second wind turbine unit (5) are arranged in the tower structure (1) vertically above each other such, that they are located at a distance from each other and that the first wind turbine unit (4) and/or the second wind turbine unit (5) comprises a machine room, which machine room is directly attached in the vertical tower structure (1).

7. Wind turbine according to any one of Claims 1 - 6, **characterized in, that** the first tower part (2) and the second tower part (3) are arranged telescopically inside each other such, that the second tower part (3) is situated partly inside the first tower part (2).

8. Wind turbine according to any one of Claims 1 - 6, **characterized in, that** the first tower part (2) connects to the second tower part (3) by means of a flange joint or by some equivalent joint.

9. Wind turbine according to any one of Claims 1 - 8, **characterized in, that** the first tower part (2) is connected to the second tower part (3) by means of a releasable joint, like a bolt joint, and/or by a permanent joint, such as concrete casting.

10. Wind turbine according to any one of Claims 1 - 9, **characterized in, that** the first tower part (2) and/or the second tower part (3) at least partly is conical in shape.

11. Wind turbine according to any one of Claims 1 - 10, **characterized in, that** the tower structure (1) comprises a third tower part, which, at least partly, is situated above the second tower part (3).

12. A method for constructing a wind turbine, which wind turbine comprises a vertical tower structure (1), **characterized in, that** the method comprises stages, in which:
- a first tower part (2) and a second tower part (3) are cast out of concrete such, that the second tower part (3) at least partly is located inside the first tower part (2),
- the first tower part (2) is arranged to the substratus in an attached manner,
- a second wind turbine unit (5) is arranged in the second tower part (3),
- the second tower part (3) is lifted out, at least partly, from the interior of the first tower part (2),
- the first tower part (2) and the second tower part (3) are attached to each other, and a first wind turbine unit (4) is arranged in the first tower part (2).

13. Method according to Claim 12, **characterized in, that** the first tower part (2) is attached to the ground.

14. Method according to Claim 12, **characterized in, that** the first tower part (2) is attached to a separate foundation.

15. Method according to any one of the Claims 12 - 15, **characterized in, that** the first tower part (2) and the second tower part (3) are attached to each other by means of a releasable joint, such as a bolt joint, and/or by means of a permanent joint, such as concrete casting.

16. Method according to any one of the Claims 12 - 14, **characterized in, that** the first wind turbine unit (4) and the second wind turbine unit (5) are arranged in the tower structure (1) vertically above each other such, that they are situated at a distance from each other, and that the first wind turbine unit (4) and/or the second wind turbine unit (5) comprises a machine room, which machine room is attached directly to the vertical tower structure (1).

17. A method for increasing the height of an existing wind turbine in order to form an extended wind turbine, which existing wind turbine comprises an existing tower (3) and an existing wind turbine unit (5), **characterized in, that** the method comprises stages, in which
- around the existing tower, a tower extension part is cast out of concrete,
- the existing tower (3) and the wind turbine unit (5) arranged in it are together lifted or pulled in relation to the tower extension part such, that the tower extension part forms a first tower part (2) of the extended wind turbine and the existing tower (3) forms a second tower part (3) of the existing wind turbine and the existing wind turbine unit (5) forms a second wind turbine unit (5), and such, that the second tower part (3) at least partly is located above the first tower part (2),
- the first tower part (2) and the second tower part (3) are attached to each other to form a tower structure (1), and
- additionally, a first wind turbine unit (4) is arranged in the extended wind turbine.

18. Method according to Claim 17, **characterized in, that** the first wind turbine unit (4) is arranged in the first tower part (2).

19. Method according to Claim 17, **characterized in, that** the first wind turbine unit (4) is arranged in the second tower part (3).

20. Method according to Claim 17, **characterized in, that** the first wind turbine unit (4) is arranged in the area of the joint between the first tower part (2) and the second tower part (3).

21. Method according to any one of the Claims 17 - 20, **characterized in, that** the first and the second wind turbine unit (4, 5) are arranged in the tower structure (1) vertically above each other such, that they are located at a distance from each other, and that the first wind turbine unit (4) and/or the second wind turbine unit (5) comprises a machine room, which machine room is attached directly to the vertical tower structure (1).

22. Method according to any one of the Claims 17 - 21, **characterized in, that** the existing tower (3) and the tower extension part are made of different materials.
